# EUROPÄISCHE PATENTSCHRIFT

(11) **EP 3 512 177 B1**
(45) Veröffentlichungstag und Bekanntmachung des Hinweises auf die Patenterteilung: **01.04.2020**
(21) Anmeldenummer: 19151434.8
(22) Anmeldetag: 11.01.2019
(51) Int. Cl.: H04L 29/06, H04L 29/08, H04W 12/12

(54) **SYSTEM MIT EINEM ELEKTRISCHEN GERÄT**
SYSTEM COMPRISING AN ELECTRONIC DEVICE
SYSTÈME DOTÉ D'UN APPAREIL ÉLECTRIQUE

(30) Priorität: 12.01.2018 DE 102018100629
(43) Veröffentlichungstag der Anmeldung: 17.07.2019
(73) Patentinhaber: Krohne Messtechnik GmbH, 47058 Duisburg (DE)
(72) Erfinder: Glasmachers, Holger, 44795 Bochum (DE)
(74) Vertreter: Gesthuysen Patent- und Rechtsanwälte

(56) Entgegenhaltungen:
- EP-A1- 1 742 135
- EP-A1- 3 244 274
- DE-A1-102013 221 164
- DE-A1-102016 104 625

## Beschreibung

Die Erfindung betrifft ein System mit einem elektrischen Gerät und einer Anschlusseinrichtung. Das elektrische Gerät weist eine Steuerungseinrichtung, eine erste Schnittstelleneinrichtung und eine zweite Schnittstelleneinrichtung auf. Zwischen der Steuerungseinrichtung und der Anschlusseinrichtung über die erste Schnittstelleneinrichtung ist ein leitungsgebundener erster Kommunikationspfad vorhanden. Demnach ist der erste Kommunikationspfad über die erste Schnittstelleneinrichtung geführt. Weiter ist zwischen der Steuerungseinrichtung und der zweiten Schnittstelleneinrichtung ein zweiter Kommunikationspfad vorhanden.

Systeme der angegebenen Art werden zum Beispiel in industriellen Anlagen eingesetzt. Industrielle Anlagen mit diesen Systemen setzen zumeist auch weitere elektrische Einrichtungen, wie zum Beispiel Prozessleitsysteme oder Computersysteme, ein, die ebenfalls Schnittstelleneinrichtungen aufweisen. Somit handelt es sich bei dem System um ein elektrisches System. Zumindest einige der elektrischen Einrichtungen, wozu auch die Systeme gehören, einer industriellen Anlage sind über Schnittstelleneinrichtungen mit einem Übertragungsmedium verbunden und kommunizieren über dieses miteinander.

Kommunikation ist allgemein die Übertragung von Informationen über Kommunikationspfade durch Signale. Informationen umfassen Daten und Anweisungen. Kommunikationspfade können leitungsgebunden und leitungsfrei sein. Bei einem leitungsgebundenen Kommunikationspfad werden Signale über ein Übertragungsmedium, wie zum Beispiel elektrische Leiter, übertragen. Bei einem leitungsfreien Kommunikationspfad werden Signale über Funk übertragen, benötigen also kein Übertragungsmedium. Kommunikation in industriellen Anlagen wird dabei für gewöhnlich unterteilt zum einen in sichere Kommunikation und zum anderen in unsichere Kommunikation. Bei sicherer Kommunikation sind die übertragenen Informationen gegen Manipulation geschützt, so dass ihre Integrität gewährleistet ist. Bei unsicherer Kommunikation ist das nicht der Fall. Sichere Kommunikation wird durch Maßnahmen angestrebt, die eine Manipulation von Informationen zumindest erschweren und im Idealfall unmöglich machen. Entsprechend erfolgt sichere Kommunikation über sichere Kommunikationspfade mit Schnittstelleneinrichtungen zur sicheren Kommunikation und unsichere Kommunikation über unsichere Kommunikationspfade mit Schnittstelleneinrichtungen zur unsicheren Kommunikation. Es liegt zum einen im Ermessen des Betreibers einer industriellen Anlage und zum anderen in der Art der industriellen Anlage, welche Kommunikation als sicher und welche als unsicher angesehen wird. Eine allgemeingültige Definition ist weder zweckmäßig noch möglich. Für gewöhnlich ist ein System der beschriebenen Art in einer industriellen Anlage über die erste Schnittstelleneinrichtung mit weiteren elektrischen Einrichtungen der industriellen Anlage zur sicheren Kommunikation verbunden. Die sichere Kommunikation ergibt sich insbesondere aus der Leitungsbindung des ersten Kommunikationspfads, der sich auch über die weiteren Einrichtungen erstreckt, und der Bekanntheit der weiteren Einrichtungen. Durch die Bekanntheit der weiteren Einrichtungen ist gewährleistet, dass keine unerlaubten Kommunikationen stattfinden. Unerlaubte Kommunikationen sind solche, welche die ordnungsgemäße Funktion der industriellen Anlage beeinträchtigen. Weiterhin wird oftmals die zweite Schnittstelleneinrichtung zur unsicheren Kommunikation verwendet, zum Beispiel um bestimmte Informationen aus dem System durch eine Mehrzahl von Hilfsgeräten auszulesen zu können. Die Mehrzahl von Hilfsgeräten macht einen einfachen Auf- und Abbau des zweiten Kommunikationspfads wünschenswert, was jedoch auch den Zugriff von unautorisierten und unbekannten Hilfsgeräten erleichtert. Schon aufgrund des möglichen Zugriffs von unautorisierten Hilfsgeräten auf die zweite Schnittstelleneinrichtung gilt diese Kommunikation als unsicher und die zweite Schnittstelleneinrichtung als Schwachstelle in der industriellen Anlage angesehen.

Diese Schwachstelle ermöglicht oftmals, die industrielle Anlage durch einen Angriff zu beeinträchtigen. Denn es ist erkannt worden, dass es bei Systemen der beschriebenen Art möglich ist, über die zweite Schnittstelleneinrichtung das System selbst und/oder weitere elektrische Einrichtungen der industriellen Anlage in ihrer ordnungsgemäßen Funktion zu beeinträchtigen.

In diesem Zusammenhang wird auf die Druckschrift EP 3 244 274 A1 verwiesen.

Eine Aufgabe der vorliegenden Erfindung ist daher die Angabe eines Systems, bei dem die aufgezeigte Schwachstelle nicht mehr vorhanden oder jedenfalls abgemildert ist. Bei einem solchen System ist die Sicherheit des Systems an sich und auch einer industriellen Anlage verbessert.

Die Aufgabe ist bei einem System der beschriebenen Art durch die Lehre gemäß Patentanspruch 1 gelöst. Gemäß der Lehre weist das System eine Kopplungseinrichtung auf, die in einen ersten Kopplungszustand und in einen zweiten Kopplungszustand steuerbar ist. Im ersten Kopplungszustand ist der erste Kommunikationspfad durch die Kopplungseinrichtung durchgeführt und im zweiten Kopplungszustand ist der erste Kommunikationspfad in der Kopplungseinrichtung unterbrochen. Somit ist im ersten Kopplungszustand eine Kommunikation über den ersten Kommunikationspfad möglich und ist im zweiten Kopplungszustand keine Kommunikation über den ersten Kommunikationspfad möglich. Die Steuerungseinrichtung ist ausgebildet, einen Angriff auf das System über die zweite Schnittstelleneinrichtung zu erkennen und bei einem erkannten Angriff die Kopplungseinrichtung vom ersten Kopplungszustand in den zweiten Kopplungszustand zu steuern. Demnach ist die Steuerungseinrichtung zur Steuerung der Kopplungseinrichtung ausgebildet. Ein Angriff auf das System ist insbesondere ein Versuch, unerlaubte Kommunikationen über eine Schnittstelleneinrichtung auszuführen.

Ein Vorteil des erfindungsgemäßen Systems gegenüber aus dem Stand der Technik bekannten Systemen ist, dass bei einem erkannten Angriff der erste Kommunikationspfad unterbrochen ist, sodass eine Beeinträchtigung nur des Systems, nicht aber mit dem System über die erste Schnittstelleneinrichtung verbundenen weiteren elektrischen Einrichtungen möglich ist.

Die Wahrscheinlichkeit eines Angriffs über die zweite Schnittstelleneinrichtung ist größer als die eines Angriffs über die erste Schnittstelleneinrichtung. Denn für gewöhnlich sind die mit der ersten Schnittstelleneinrichtung verbundenen elektrischen Einrichtungen im Gegensatz zu den mit der zweiten Schnittstelleneinrichtung verbundenen Hilfsgeräten besser bekannt. Deshalb ist zunächst auch nur vorgesehen, dass die Steuerungseinrichtung ausgebildet ist, einen Angriff auf das System über die zweite Schnittstelleneinrichtung zu erkennen. Jedoch kann die Sicherheit weiter verbessert werden, wenn auch Angriffe auf das System über die erste Schnittstelleneinrichtung erkannt werden. Deshalb ist in einer Ausgestaltung des erfindungsgemäßen Systems vorgesehen, dass die Steuerungseinrichtung auch ausgebildet ist, einen Angriff auf das System über die erste Schnittstelleneinrichtung zu erkennen und bei einem erkannten Angriff die Kopplungseinrichtung vom ersten Kopplungszustand in den zweiten Kopplungszustand zu steuern.

In einer weiteren Ausgestaltung des Systems ist vorgesehen, dass die Steuerungseinrichtung zum Erkennen eines Angriffs ausgebildet ist, indem in der Steuerungseinrichtung zulässige Kommunikationen über die erste Schnittstelleneinrichtung und/oder über die zweite Schnittstelleneinrichtung abgespeichert sind bzw. ist und indem davon abweichende Kommunikationen als ein Angriff gewertet werden. Nicht zulässige Kommunikationen sind zum Beispiel ein Eingriff in eine Parametrierung des Systems oder einer anderen elektrischen Einrichtung einer industriellen Anlage über die zweite Schnittstelleneinrichtung oder ein schreibender Zugriff über die zweite Schnittstelleneinrichtung.

Es ist erkannt worden, dass bei einem Angriff auf das System die Möglichkeit besteht, dass die Steuerungseinrichtung derart beeinträchtigt wird, sodass die Steuerungseinrichtung nicht mehr in der Lage ist, die Kopplungseinrichtung vom ersten Kopplungszustand in den zweiten Kopplungszustand zu steuern. Um diese Schwachstelle zu beseitigen, ist in einer weiteren Ausgestaltung vorgesehen, dass, wenn die Kopplungseinrichtung nicht angesteuert ist, die Kopplungseinrichtung im zweiten Kopplungszustand ist. Demnach muss die Kopplungseinrichtung von der Steuerungseinrichtung aktiv angesteuert sein, sodass die Kopplungseinrichtung im ersten Kopplungszustand ist. Dadurch ist das System inhärent sicher.

In einer weiteren Ausgestaltung ist vorgesehen, dass die Kopplungseinrichtung zwischen der ersten Schnittstelleneinrichtung und der Anschlusseinrichtung angeordnet ist. Bei dieser Anordnung ist die Kopplungseinrichtung zwischen dem elektrischen Gerät und der Anschlusseinrichtung angeordnet. Die Anordnung der Kopplungseinrichtung zwischen dem elektrischen Gerät und der Anschlusseinrichtung bedeutet eine einfache Nachrüstbarkeit von aus dem Stand der Technik bekannten Systemen.

In einer weiteren Ausgestaltung ist vorgesehen, dass die Kopplungseinrichtung separat von der Steuerungseinrichtung ist. Vorzugsweise ist die Kopplungseinrichtung nicht nur separat von der Steuerungseinrichtung, sondern auch separat von den Schnittstelleneinrichtungen, also von dem elektrischen Gerät. Insbesondere bietet sich eine Anordnung der separaten Kopplungseinrichtung zwischen der ersten Schnittstelleneinrichtung und der Anschlusseinrichtung an. Diese Ausgestaltung bietet sich aufgrund ihrer Modularität und der mit dieser einhergehenden einfachen Nachrüstbarkeit von aus dem Stand der Technik bekannten Systemen an. Wenn diese oder die vorangehende Ausgestaltung bei bestehenden Systemen nachgerüstet wird, ist die Steuerungseinrichtung derart anzupassen, sodass sie zur Steuerung der Kopplungseinrichtung und zum Erkennen von Angriffen ausgebildet ist. Für gewöhnlich sind diese Anpassungen bei bestehenden Steuerungseinrichtungen durch Programmierung umsetzbar.

Die Kopplungseinrichtung ist derart ausgebildet, sodass der erste Kommunikationspfad im ersten Kopplungszustand durch die Kopplungseinrichtung hindurchgeführt und im zweiten Kopplungszustand in der Kopplungseinrichtung unterbrochen ist. In einer weiteren Ausgestaltung ist vorgesehen, dass die Kopplungseinrichtung zur Umsetzung des ersten Kopplungszustands und des zweiten Kopplungszustands mindestens einen ersten Schalter aufweist. Der erste Schalter ist in einen ersten Schaltzustand und einen zweiten Schaltzustand steuerbar und die Steuerungseinrichtung ist zur Steuerung des ersten Schalters ausgebildet. Der erste Schaltzustand liegt im ersten Kopplungszustand und der zweite Schaltzustand liegt im zweiten Kopplungszustand vor. Der erste Schalter ist zum Beispiel als einpoliger Einschalter ausgebildet. Bei dieser Ausbildung ist der erste Schalter dann im ersten Kopplungszustand geschlossen, sodass er den ersten Kommunikationspfad durch die Kopplungseinrichtung hindurchführt, und im zweiten Kopplungszustand geöffnet, sodass er den ersten Kommunikationspfad in der Kopplungseinrichtung unterbricht.

In einer bevorzugten Ausgestaltung ist zunächst vorgesehen, dass die erste Schnittstelleneinrichtung als Schleifenschnittstelle ausgebildet ist. Aufgrund dieser Ausbildung der Schleifenschnittstelle ist weiter vorgesehen, dass die Anschlusseinrichtung zum Anschluss an ein Übertragungsmedium in Ringtopologie ausgebildet ist. Dabei weist das Übertragungsmedium einen Ringkommunikationspfad auf. Weiter ist die Kopplungseinrichtung ausgebildet, im ersten Kopplungszustand den ersten Kommunikationspfad in den Ringkommunikationspfad einzuschleifen und im zweiten Kopplungszustand den ersten Kommunikationspfad vom Ringkommunikationspfad abzutrennen.

Das Einschleifen des ersten Kommunikationspfads in den Ringkommunikationspfad bedeutet, dass der Ringkommunikationspfad aufgetrennt und der erste Kommunikationspfad in den Ringkommunikationspfad eingefügt ist, sodass der erste Kommunikationspfad und der Ringkommunikationspfad zusammen einen neuen Ringkommunikationspfad bilden. Im zweiten Kopplungszustand ist der erste Kommunikationspfad vom Ringkommunikationspfad abgetrennt, Das bedeutet, dass der Ringkommunikationspfad in der Kopplungseinrichtung aufgetrennt ist. In den Ringkommunikationspfad eines Übertragungsmediums in Ringtopologie sind für gewöhnlich die Kommunikationspfade von mehreren Systemen und/oder elektrischen Einrichtungen einschleifbar, sodass diese untereinander kommunizieren können.

Vorzugsweise erfolgt nicht nur Kommunikation, sondern auch eine Versorgung des Systems mit elektrischer Energie über ein Übertragungsmedium, welches mit der ersten Schnittstelleneinrichtung verbunden ist. Somit erfolgt die Versorgung des Systems über die erste Schnittstelleneinrichtung. Dann ist die Versorgung des Systems im zweiten Kopplungszustand unterbrochen, weshalb das System nicht mehr zu einer Fortführung des Angriffs benutzt werden kann, welcher den zweiten Kopplungszustand bewirk hat.

In einer Weiterbildung der vorstehenden Ausgestaltung, bei welcher die Kopplungseinrichtung zur Umsetzung des ersten Kopplungszustands und des zweiten Kopplungszustands mindestens einen ersten Schalter aufweist, ist vorgesehen, dass die Kopplungseinrichtung mindestens einen zweiten Schalter aufweist. Weiter ist vorgesehen, dass der erste Schalter und der zweite Schalter gleichzeitig jeweils in einen ersten Schaltzustand oder in einen zweiten Schaltzustand steuerbar sind. Dabei liegen der erste Schaltzustand im ersten Kopplungszustand und der zweite Schaltzustand im zweiten Kopplungszustand vor. Im ersten Schaltzustand trennt der zweite Schalter den Ringkommunikationspfad auf und fügt der erste Schalter den ersten Kommunikationspfad in den Ringkommunikationspfad ein. Im zweiten Schaltzustand schleift der zweite Schalter den Ringkommunikationspfad durch und trennt der erste Schalter den Kommunikationspfad vom Ringkommunikationspfad ab.

In einer zur vorstehenden Weiterbildung alternativen Weiterbildung ist vorgesehen, dass die Kopplungseinrichtung neben dem ersten Schalter mindestens einen zweiten Schalter und einen dritten Schalter aufweist. Dabei sind der erste Schalter, der zweite Schalter und der dritte Schalter gleichzeitig jeweils in einen ersten Schaltzustand und einen zweiten Schaltzustand steuerbar. Der erste Schaltzustand liegt im ersten Kopplungszustand und der zweite Schaltzustand im zweiten Kopplungszustand vor. Im ersten Schaltzustand trennt einerseits der zweite Schalter den Ringkommunikationspfad auf und fügen andererseits der erste Schalter und der dritte Schalter den ersten Kommunikationspfad in den Ringkommunikationspfad ein. Im zweiten Schaltzustand schleift einerseits der zweite Schalter den Ringkommunikationspfad durch und trennen andererseits der erste Schalter und der dritte Schalter den ersten Kommunikationspfad vom Ringkommunikationspfad ab.

Die beiden vorstehenden zueinander alternativen Weiterbildungen weisen Gemeinsamkeiten auf. Im ersten Kopplungszustand ist der erste Kommunikationspfad in den Ringkommunikationspfad eingeschleift und im zweiten Kopplungszustand ist der Ringkommunikationspfad in der Kopplungseinrichtung durchgeschleift. Bei der alternativen Weiterbildung kommt hinzu, dass durch die Verwendung nicht von zwei, sondern von drei Schaltern im zweiten Kopplungszustand eine galvanische Trennung vom Übertragungsmedium und der ersten Schnittstelleneinrichtung gegeben ist.

Bei den beiden vorstehenden Weiterbildungen sind der erste, zweite und gegebenenfalls dritte Schalter sind zum Beispiel als einpolige Einschalter ausgebildet. Im ersten Schaltzustand sind der erste und gegebenenfalls dritte Schalter geschlossen und im zweiten Schaltzustand geöffnet und ist der zweite Schalter im ersten Schaltzustand geöffnet und im zweiten Schaltzustand geschlossen. Die Steuerung der Schalter erfolgt dabei durch die Steuerungseinrichtung, die entsprechend ausgebildet und mit den Schaltern der Kopplungseinrichtung verbunden ist.

Wenn die erste Schnittstelleneinrichtung als Schleifenschnittstelle ausgebildet ist, so ist in einer Ausgestaltung vorgesehen, dass die erste Schnittstelleneinrichtung als Stromschleifenschnittstelle ausgebildet ist. Diese Ausbildung umfasst zum Beispiel eine Ausbildung gemäß dem 4-20 mA-Standard und/oder gemäß dem HART-Standard. Der 4-20 mA-Standard ist zum Beispiel in DIN 66258 normiert.

In einer weiteren Ausgestaltung des Systems ist vorgesehen, dass die zweite Schnittstelleneinrichtung als Funkschnittstelle ausgebildet ist. Die Leitungsbindung des ersten Kommunikationspfads begründet die Eignung der ersten Schnittstelleneinrichtung zur sicheren Kommunikation. Im Gegensatz dazu bewirkt die Ausbildung der zweiten Schnittstelleneinrichtung als Funkschnittstelle eine höhere Anfälligkeit für erfolgreiche Angriffe auf das System, weshalb die zweite Schnittstelleneinrichtung nur zur unsicheren Kommunikation ausgebildet ist. Jedoch ermöglicht die Ausbildung der zweiten Schnittstelleneinrichtung als Funkschnittstelle einen einfacheren Zugang zu dem System, was für bestimmte erlaubte Anwendungen vorteilhaft ist.

In einer weiteren Ausgestaltung ist vorgesehen, dass das elektrische Gerät als Feldgerät ausgebildet ist. Feldgeräte werden insbesondere in industriellen Anlagen zur Prozessautomation eingesetzt. Die Prozessautomation ist mit der Automatisierung von industriellen Prozessen, wie zum Beispiel Herstellungsprozessen, befasst. Solche Prozesse werden unter anderem durch Aktoren gesteuert und durch Sensoren überwacht. Aktoren sind zum Beispiel Stellglieder und Ventile und Sensoren sind zum Beispiel Durchfluss-, Füllstands-, Temperatur-, Druck-, Analyse-, Gas- und Dampfmessgeräte. Solche Aktoren und Sensoren sind vorzugsweise als Feldgeräte ausgebildet, wobei Feldgeräte eine Schnittstelleneinrichtung, wie zum Beispiel die erste und/oder zweite Schnittstelleneinrichtung, zur Kommunikation aufweisen.

Im Einzelnen ist eine Vielzahl von Möglichkeiten gegeben, das System auszugestalten und weiterzubilden. Dazu wird verwiesen sowohl auf die dem Patentanspruch 1 nachgeordneten Patentansprüche als auch auf die nachfolgende Beschreibung eines bevorzugten Ausführungsbeispiels in Verbindung mit der Zeichnung. In der Zeichnung zeigt abstrahiert
- Fig. 1: eine industrielle Anlage mit einem System und mehreren Einrichtungen
- Fig. 2: das System der industriellen Anlage.

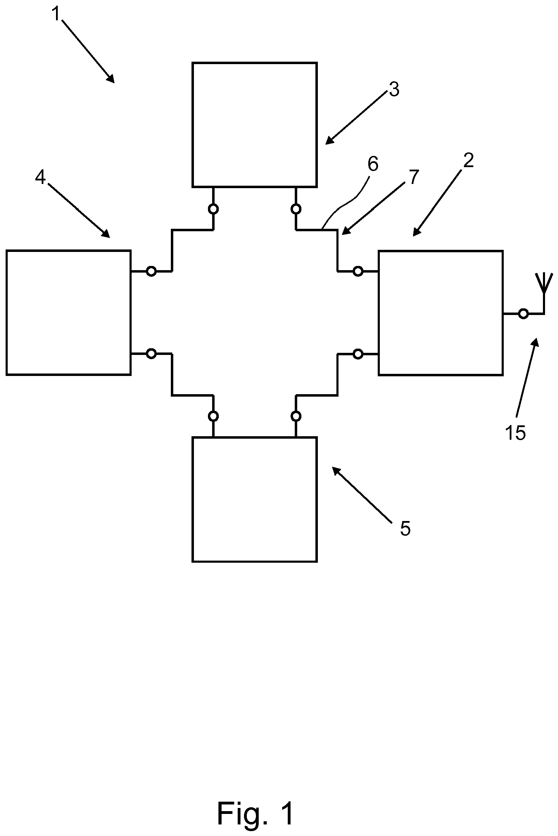

Fig. 1 zeigt wesentliche Merkmale einer industriellen Anlage 1. Die industrielle Anlage 1 weist neben einem elektrischen System 2 noch weitere elektrische Einrichtungen 3, 4, 5 auf. Die weiteren elektrischen Einrichtungen 3, 4, 5 sind zum Beispiel Prozessleitsysteme oder Computersysteme. Sowohl das System 2 als auch die weiteren elektrischen Einrichtungen 3, 4, 5 weisen Schnittstelleneinrichtungen auf, über welche sie mit einem Übertragungsmedium 6 elektrisch leitend verbunden sind. Das Übertragungsmedium 6 ist in Ringtopologie ausgebildet und weist einen Ringkommunikationspfad 7 auf. Das System 2 und die weiteren elektrischen Einrichtungen 3, 4, 5 kommunizieren über den Ringkommunikationspfad 7 miteinander. Aufgrund des Übertragungsmediums 6 ist der Ringkommunikationspfad 7 leitungsgebunden. Aufgrund der Leitungsbindung des Ringkommunikationspfads 7 und der Bekanntheit des Systems 2 und der weiteren elektrischen Einrichtung 3, 4, 5 wird die Kommunikation über den Ringkommunikationspfad im Folgenden als sicher betrachtet.

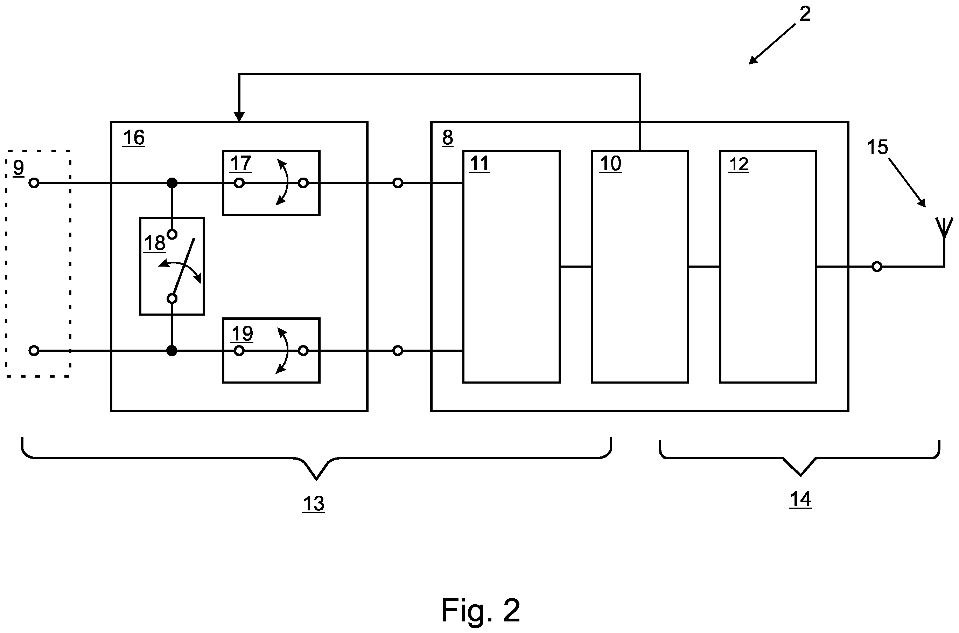

Fig. 2 zeigt wesentliche Merkmale des Systems 2. Das System 2 weist zunächst ein elektrisches Gerät 8 und eine Anschlusseinrichtung 9 auf. Das elektrische Gerät 8 weist seinerseits eine Steuerungseinrichtung 10, eine erste Schnittstelleneinrichtung 11 und eine zweite Schnittstelleneinrichtung 12 auf. Zwischen der Steuerungseinrichtung 10 und der Anschlusseinrichtung 9 ist ein erster leitungsgebundener Kommunikationspfad 13 vorhanden. Der erste Kommunikationspfad 13 ist über die erste Schnittstelleneinrichtung 11 geführt. Somit liegt die erste Schnittstelleneinrichtung 11 im ersten Kommunikationspfad 13. Weiter ist zwischen der Steuerungseinrichtung 10 und der zweiten Schnittstelleneinrichtung 12 ein zweiter Kommunikationspfad 14 vorhanden.

Die erste Schnittstelleneinrichtung 11 ist in diesem Ausführungsbeispiel als Schleifenschnittstelle ausgebildet, und zwar als Stromschleifenschnittstelle. Deshalb ist die erste Schnittstelleneinrichtung 11 auch zum Anschluss an ein Übertragungsmedium in Ringtopologie ausgebildet. Die erste Schnittstelleneinrichtung 11 setzt dabei sowohl den 4-20 mA-Standard als auch den HART-Standard um. Die Kommunikation mit den weiteren elektrischen Einrichtungen 3, 4, 5 erfolgt demnach mit elektrischen Signalen, welche nach diesen Standards von der ersten Schnittstelleneinrichtung 11 erzeugt und empfangen werden. Weiter erfolgt eine Versorgung des elektrischen Geräts 8 mit elektrischer Energie über die erste Schnittstelleneinrichtung 11 aus dem Übertragungsmedium 6.

Die zweite Schnittstelleneinrichtung 12 ist in diesem Ausführungsbeispiel als Funkschnittstelle ausgebildet. Deshalb ist die zweite Schnittstelleneinrichtung 12 auch mit einer Antenne 15 verbunden. Somit erstreckt sich der zweite Kommunikationspfad 14 von der Steuerungseinrichtung 10 bis zur Antenne 15 und weiter bis zu einem Hilfsgerät. Die Leitungsbindung des ersten Kommunikationspfads 13 begründet dessen Eignung zur sicheren Kommunikation. Im Gegensatz dazu bewirkt die Ausbildung der zweiten Schnittstelleneinrichtung 12 als Funkschnittstelle eine höhere Anfälligkeit für erfolgreiche Angriffe auf das System 2 durch ein nicht autorisiertes Hilfsgerät, weshalb die zweite Schnittstelleneinrichtung 12 nur zur unsicheren Kommunikation ausgebildet ist. Jedoch wird vorliegend dieser Nachteil in Kauf genommen, da die Funkschnittstelle einen einfachen Zugang zu dem System 2 ermöglicht, was für bestimmte erlaubte Kommunikationen vorteilhaft ist.

Weiter weist das System 2 eine Kopplungseinrichtung 16 auf. Die Kopplungseinrichtung 16 ist separat sowohl von der Anschlusseinrichtung 9 als auch von dem elektrischen Gerät 8 und ist zwischen der ersten Schnittstelleneinrichtung 11 und der Anschlusseinrichtung 8 angeordnet. Durch die separate Kopplungseinrichtung 16 ist das System 2 modular aufgebaut.

Die Kopplungseinrichtung 16 weist einen ersten Schalter 17, einen zweiten Schalter 18 und einen dritten Schalter 19 auf. Die Schalter 17, 18, 19 sind als einpolige Einschalter ausgebildet. Die Steuerungseinrichtung 10 ist ausgebildet, die Schalter 17, 18, 19 gleichzeitig entweder in einen ersten Schaltzustand oder in einen zweiten Schaltzustand zu steuern. Im ersten Schaltzustand sind der erste Schalter 17 und der dritte Schalter 19 geschlossen und im zweiten Schaltzustand geöffnet. Der zweite Schalter 18 ist im ersten Schaltzustand geöffnet und im zweiten Schaltzustand geschlossen. Weiter sind die Schalter 17, 18, 19 derart ausgebildet, dass der erste Schalter 17 und der dritte Schalter 19 geöffnet sind und der zweite Schalter 18 geschlossen ist, wenn sie nicht angesteuert sind.

Die Kopplungseinrichtung 16 ist durch die Schalter 17, 18, 19 in einen ersten Kopplungszustand und in einen zweiten Kopplungszustand steuerbar. Im ersten Kopplungszustand sind die Schalter 17, 18, 19 im ersten Schaltzustand und im zweiten Kopplungszustand im zweiten Schaltzustand. Im ersten Kopplungszustand trennt einerseits der zweite Schalter 18 den Ringkommunikationspfad 7 auf und fügen andererseits der erste Schalter 17 und der dritte Schalter 19 den ersten Kommunikationspfad 13 in den Ringkommunikationspfad 7 ein. Dadurch ist der erste Kommunikationspfad 13 durch die Kopplungseinrichtung 16 durchgeführt, wodurch der erste Kommunikationspfad 13 in den Ringkommunikationspfad 7 eingeschleift ist. Fig. 2 zeigt den ersten Kopplungszustand. Im zweiten Kopplungszustand schleift einerseits der zweite Schalter 18 den Ringkommunikationspfad 7 durch und trennen andererseits der erste Schalter 17 und der dritte Schalter 19 den ersten Kommunikationspfad 13 vom Ringkommunikationspfad 7 ab. Somit ist der Ringkommunikationspfad 7 durch die Kopplungseinrichtung 16 durchgeschleift und der erste Kommunikationspfad 13 in der Kopplungseinrichtung 16 unterbrochen. Dabei ist der erste Kommunikationspfad 13 derart unterbrochen, dass das elektrische Gerät 8 galvanisch vom Übertragungsmedium 6 getrennt und auch die Versorgung des elektrischen Geräts 8 unterbrochen ist. Somit ist die Kopplungseinrichtung 16 ausgebildet, im ersten Kopplungszustand den ersten Kommunikationspfad 13 in den Ringkommunikationspfad 7 einzuschleifen und im zweiten Kopplungszustand den ersten Kommunikationspfad 13 vom Ringkommunikationspfad 7 abzutrennen.

Die Steuerungseinrichtung 10 ist ausgebildet, zum einen ein Angriff auf das System 2 über die zweite Schnittstelleneinrichtung 12 zu erkennen und zum anderen die Kopplungseinrichtung 16 anzusteuern. Die Steuerungseinrichtung 10 ist in diesem Ausführungsbeispiel zum Erkennen eines Angriffs auf das System 2 ausgebildet, indem in der Steuerungseinrichtung 10 zulässige Kommunikationen über die zweite Schnittstelleneinrichtung 12 abgespeichert sind und indem davon abweichende Kommunikationen als ein Angriff gewertet werden. Die Steuerungseinrichtung 10 ist zur Steuerung der Kopplungseinrichtung 16 ausgebildet, indem die Steuerungseinrichtung 10 bei einem erkannten Angriff die Kopplungseinrichtung 16 vom ersten Kopplungszustand in den zweiten Kopplungszustand steuert.

Das System 2 gewährleistet, dass bei einem erfolgreichen Angriff über die zweite Schnittstelleneinrichtung 12 die weiteren Einrichtungen 3, 4, 5 in Ihrer ordnungsgemäßen Funktion nicht beeinträchtigt sind. Zum einen ist ein Zugriff im Rahmen des Angriffs über die zweite Schnittstelleneinrichtung 12 auf den Ringkommunikationspfad 7 nicht möglich. Zum anderen ist der Ringkommunikationspfad 7 nicht unterbrochen, sodass die weiteren Einrichtungen 3, 4, 5 auch weiterhin kommunizieren können.

Ein weiteres Ausführungsbeispiel unterscheidet sich von dem vorangehenden Ausführungsbeispiel ausschließlich dadurch, dass der dritte Schalter 19 durch einen Kurzschluss ersetzt ist. Der dritte Schalter 19 fehlt demnach. Folglich ist im zweiten Kopplungszustand keine galvanische Trennung zwischen dem Übertragungsmedium 6 und dem elektrischen Gerät 8 gegeben. Ansonsten gelten die Ausführungen zum vorangehenden Ausführungsbeispiel entsprechend.

### Bezugszeichen

- 1: industrielle Anlage
- 2: System
- 3: elektrische Einrichtung
- 4: elektrische Einrichtung
- 5: elektrische Einrichtung
- 6: Übertragungsmedium
- 7: Ringkommunikationspfad
- 8: elektrisches Gerät
- 9: Anschlusseinrichtung
- 10: Steuerungseinrichtung
- 11: erste Schnittstelleneinrichtung
- 12: zweite Schnittstelleneinrichtung
- 13: erste Kommunikationspfad
- 14: zweite Kommunikationspfad
- 15: Antenne
- 16: Kopplungseinrichtung
- 17: erster Schalter
- 18: zweiter Schalter
- 19: dritter Schalter

## Patentansprüche

1. System (2) mit einem elektrischen Gerät (8) und einer Anschlusseinrichtung (9),
wobei das elektrische Gerät (8) eine Steuerungseinrichtung (10), eine erste Schnittstelleneinrichtung(11) und eine zweite Schnittstelleneinrichtung (12) aufweist und
wobei ein leitungsgebundener erster Kommunikationspfad (13) zwischen der Steuerungseinrichtung (10) und der Anschlusseinrichtung (9) über die erste Schnittstelleneinrichtung (11) und ein zweiter Kommunikationspfad (14) zwischen der Steuerungseinrichtung (10) und der zweiten Schnittstelleneinrichtung (12) vorhanden sind, und wobei das System (2) eine Kopplungseinrichtung (16) aufweist, die Kopplungseinrichtung (16) in einen ersten Kopplungszustand und in einen zweiten Kopplungszustand steuerbar ist,
der erste Kommunikationspfad (13) im ersten Kopplungszustand durch die Kopplungseinrichtung (16) durchgeführt und im zweiten Kopplungszustand in der Kopplungseinrichtung (16) unterbrochen ist und
die Steuerungseinrichtung (10) ausgebildet ist, einen Angriff auf das System (2) über die zweite Schnittstelleneinrichtung (12) zu erkennen und bei einem erkannten Angriff die Kopplungseinrichtung (16) vom ersten Kopplungszustand in den zweiten Kopplungszustand zu steuern.

2. System (2) nach Anspruch 1, **dadurch gekennzeichnet, dass** die Steuerungseinrichtung (10) ausgebildet ist, einen Angriff auf das System (2) über die erste Schnittstelleneinrichtung (11) zu erkennen und bei einem erkannten Angriff die Kopplungseinrichtung (16) vom ersten Kopplungszustand in den zweiten Kopplungszustand zu steuern.

3. System (2) nach Anspruch 1 oder 2, **dadurch gekennzeichnet, dass** die Steuerungseinrichtung (10) zum Erkennen eines Angriffs ausgebildet ist, indem in der Steuerungseinrichtung (10) zulässige Kommunikationen über die erste Schnittstelleneinrichtung (11) und/oder über die zweite Schnittstelleneinrichtung (12) abgespeichert sind bzw. ist und indem davon abweichende Kommunikationen als ein Angriff gewertet werden.

4. System (2) nach einem der Ansprüche 1 bis 3, **dadurch gekennzeichnet, dass**, wenn die Kopplungseinrichtung (16) nicht angesteuert ist, die Kopplungseinrichtung (16) im zweiten Kopplungszustand ist.

5. System (2) nach einem der Ansprüche 1 bis 4, **dadurch gekennzeichnet, dass** die Kopplungseinrichtung (16) zwischen der ersten Schnittstelleneinrichtung (11) und der Anschlusseinrichtung (9) angeordnet ist.

6. System (2) nach einem der Ansprüche 1 bis 5, **dadurch gekennzeichnet, dass** die Kopplungseinrichtung (16) separat von der Steuerungseinrichtung (10) ist.

7. System (2) nach einem der Ansprüche 1 bis 6, **dadurch gekennzeichnet**, das die Kopplungseinrichtung(16) zur Umsetzung des ersten Kopplungszustands und des zweiten Kopplungszustands mindestens einen ersten Schalter (17) aufweist.

8. System (2) nach einem der Ansprüche 1 bis 7, **dadurch gekennzeichnet,**
**dass** die erste Schnittstelleneinrichtung(11) als Schleifenschnittstelle ausgebildet ist,
**dass** die Anschlusseinrichtung (9) zum Anschluss an ein Übertragungsmedium (6) in Ringtopologie mit einem Ringkommunikationspfad (7) ausgebildet ist und
**dass** die Kopplungseinrichtung (16) ausgebildet ist,
im ersten Kopplungszustand den ersten Kommunikationspfad (13) in den Ringkommunikationspfad (7) einzuschleifen, und ausgebildet ist,
im zweiten Kopplungszustand den ersten Kommunikationspfad (13) vom Ringkommunikationspfad (7) abzutrennen.

9. System (2) nach Anspruch 7 und 8, **dadurch gekennzeichnet, dass** die Kopplungseinrichtung (16) mindestens einen zweiten Schalter (18) aufweist, dass der erste Schalter (17) und der zweite Schalter (18) gleichzeitig jeweils in einen ersten Schaltzustand oder einen zweiten Schaltzustand steuerbar sind,
dass der erste Schaltzustand im ersten Kopplungszustand und der zweite Schaltzustand im zweiten Kopplungszustand vorliegen,
dass im ersten Schaltzustand der zweite Schalter (18) den Ringkommunikationspfad (7) auftrennt und der erste Schalter (17) den ersten Kommunikationspfad (13) in den Ringkommunikationspfad einfügt und
dass im zweiten Schaltzustand der zweite Schalter (18) den Ringkommunikationspfad (7) durchschleift und der erste Schalter (17) den ersten Kommunikationspfad (13) vom Ringkommunikationspfad abtrennt.

10. System (2) nach Anspruch 7 und 8, **dadurch gekennzeichnet, dass** die Kopplungseinrichtung (16) mindestens einen zweiten Schalter (18) und einen dritten Schalter (19) aufweist,
dass der erste Schalter (17), der zweite Schalter (18) und der dritte Schalter (19) gleichzeitig jeweils in einen ersten Schaltzustand oder einen zweiten Schaltzustand steuerbar sind,
dass der erste Schaltzustand im ersten Kopplungszustand und der zweite Schaltzustand im zweiten Kopplungszustand vorliegen,
dass im ersten Schaltzustand einerseits der zweite Schalter (18) den Ringkommunikationspfad (7) auftrennt und andererseits der erste Schalter (17) und der dritte Schalter (19) den ersten Kommunikationspfad (13) in den Ringkommunikationspfad (7) einfügen und
dass im zweiten Schaltzustand einerseits der zweite Schalter (18) den Ringkommunikationspfad (7) durchschleift und andererseits der erste Schalter (17) und der dritte Schalter (19) den ersten Kommunikationspfad (13) vom Ringkommunikationspfad (7) abtrennen.

11. System (2) nach einem der Ansprüche 8 bis 10, **dadurch gekennzeichnet, dass** die erste Schnittstelleneinrichtung (11) als Stromschleifenschnittstelle ausgebildet ist.

12. System (2) nach einem der Ansprüche 1 bis 11, **dadurch gekennzeichnet, dass** die zweite Schnittstelleneinrichtung (12) als Funkschnittstelle ausgebildet ist.

13. System (2) nach einem der Ansprüche 1 bis 12, **dadurch gekennzeichnet, dass** das elektrische Gerät (8) als Feldgerät ausgebildet ist.

## Claims

1. System (2) with an electrical apparatus (8) and a connecting device (9),
wherein the electrical apparatus (8) comprises a control unit (10), a first interface device (11) and a second interface device (12), and
wherein a wire-bound first communication path (13) is provided between the control unit (10) and the connecting device (9) via the first interface device (11) and a second communication path (14) is provided between the control unit (10) and the second interface device (12), and
wherein the system (2) has a coupling device (16),
the coupling device (16) can be set into a first coupling state and into a second coupling state,
the first communication path (13) is led through the coupling device (16) in the first coupling state and is interrupted in the coupling device (16) in the second coupling state, and
the control unit (10) is designed to detect an attack on the system (2) via the second interface device (12) and, in the event of a detected attack, to set the coupling device (16) from the first coupling state into the second coupling state.

2. System (2) according to claim 1, **characterized in that** the control unit (10) is designed to detect an attack on the system (2) via the first interface device (11) and, in the event of a detected attack, to set the coupling device (16) from the first coupling state into the second coupling state.

3. System (2) according to claim 1 or 2, **characterized in that** the control unit (10) is designed for detecting an attack, **in that** permissible communications via the first interface device (11) and/or via the second interface device (12) is or are stored in the control unit (10), and **in that** communications deviating therefrom are classified as an attack.

4. System (2) according to any one of claims 1 to 3, **characterized in that**, if the coupling device (16) is not actuated, the coupling device (16) is in the second coupling state.

5. System (2) according to any one of claims 1 to 4, **characterized in that** the coupling device (16) is arranged between the first interface device (11) and the connecting device (9).

6. System (2) according to any one of claims 1 to 5, **characterized in that** the coupling device (16) is separate from the control unit (10).

7. System (2) according to any one of claims 1 to 6, **characterized in that** the coupling device (16) comprises at least one first switch (17) for implementing the first coupling state and the second coupling state.

8. System (2) according to any one of claims 1 to 7, **characterized in**
**that** the first interface device (11) is designed as a loop interface,
**that** the connecting device (9) is designed to be connected to a transmitting medium (6) in ring topology with a ring communication path (7), and
**that** the coupling device (16) is designed
to loop the first communication path (13) into the ring communication path (7) in the first coupling state, and
to separate the first communication path (13) from the ring communication path (7) in the second coupling state.

9. System (2) according to claims 7 and 8, **characterized in that** the coupling device (16) has at least a second switch (18),
that the first switch (17) and the second switch (18) can each be simultaneously set into a first switching state or a second switching state,
that the first switching state exists in the first coupling state and the second switching state exists in the second coupling state,
that, in the first switching state, the second switch (18) splits up the ring communication path (7) and the first switch (17) loops the first communication path (13) into the ring communication path and
that, in the second switching state, the second switch (18) loops the ring communication path (7) in and the first switch (17) separates the first communication path (13) from the ring communication path.

10. System (2) according to claims 7 and 8, **characterized in that** the coupling device (16) comprises at least a second switch (18) and a third switch (19),
that the first switch (17), the second switch (18) and the third switch (19) can each be simultaneously set into a first switching state or a second switching state,
that the first switching state exists in the first coupling state and the second switching state exists in the second coupling state,
that, in the first switching state, the second switch (18), on the one hand, loops the ring communication path (7) in and, on the other hand, the first switch (17) and the third switch (19) loop the first communication path (13) into the ring communication path (7) and
that, in the second switching state, the second switch (18), on the one hand, loops the ring communication path (7) in and, on the other hand, the first switch (17) and the third switch (19) separate the first communication path (13) from the ring communication path (7).

11. System (2) according to any one of claims 8 to 10, **characterized in that** the first interface device (11) is designed as a current loop interface.

12. System (2) according to any one of claims 1 to 11, **characterized in that** the second interface device (12) is designed as a wireless interface.

13. System (2) according to any one of claims 1 to 12, **characterized in that** the electrical apparatus (8) is designed as a field device.

## Revendications

1. Système (2) comprenant un appareil électrique (8) et un dispositif de raccordement (9),
l'appareil électrique (8) possédant un dispositif de commande (10), un premier dispositif d'interface (11) et un deuxième dispositif d'interface (12) et
un premier chemin de communication (13) filaire étant présent entre le dispositif de commande (10) et le dispositif de raccordement (9) par le biais du premier dispositif d'interface (11) et un deuxième chemin de communication (14) entre le dispositif de commande (10) et le deuxième dispositif d'interface (12),
et le système (2) possédant un dispositif de couplage (16),
le dispositif de connexion (16) pouvant être commandé dans un premier état de connexion et dans un deuxième état de connexion,
le premier chemin de communication (13), dans le premier état de connexion, étant acheminé à travers le dispositif de connexion (16) et étant interrompu dans le dispositif de connexion (16) dans le deuxième état de connexion et
le dispositif de commande (10) étant configuré pour reconnaître une attaque sur le système (2) par le biais du deuxième dispositif d'interface (12) et, en présence d'une attaque reconnue, commander le dispositif de connexion (16) du premier état de connexion dans le deuxième état de connexion.

2. Système (2) selon la revendication 1, **caractérisé en ce que** le dispositif de commande (10) est configuré pour reconnaître une attaque sur le système (2) par le biais du premier dispositif d'interface (11) et, en présence d'une attaque reconnue, commander le dispositif de connexion (16) du premier état de connexion dans le deuxième état de connexion.

3. Système (2) selon la revendication 1 ou 2, **caractérisé en ce que** le dispositif de commande (10) est configuré pour reconnaître une attaque par le fait que les communications autorisées par le biais du premier dispositif d'interface (11) et/ou par le biais du deuxième dispositif d'interface (12) est ou sont mémorisées dans le dispositif de commande (10) et par le fait que les communications qui en sont différentes sont évaluées comme une attaque.

4. Système (2) selon l'une des revendications 1 à 3, **caractérisé en ce que** lorsque le dispositif de connexion (16) n'est pas activé par commande, le dispositif de connexion (16) se trouve dans le deuxième état de connexion.

5. Système (2) selon l'une des revendications 1 à 4, **caractérisé en ce que** le dispositif de connexion (16) est disposé entre le premier dispositif d'interface (11) et le dispositif de raccordement (9).

6. Système (2) selon l'une des revendications 1 à 5, **caractérisé en ce que** le dispositif de connexion (16) est séparé du dispositif de commande (10).

7. Système (2) selon l'une des revendications 1 à 6, **caractérisé en ce que** le dispositif de connexion (16) possède au moins un commutateur (17) pour la mise en œuvre du premier état de connexion et du deuxième état de connexion.

8. Système (2) selon l'une des revendications 1 à 7, **caractérisé en ce que**
le premier dispositif d'interface (11) est réalisé sous la forme d'une interface en boucle,
**en ce que** le dispositif de raccordement (9) est configuré pour le raccordement à un support de transmission (6) en topologie en anneau avec un chemin de communication en anneau (7) et
**en ce que** le dispositif de connexion (16) est configuré pour,
dans le premier état de connexion, inclure par bouclage le premier chemin de communication (13) dans le chemin de communication en anneau (7), et est configuré pour, dans le deuxième état de connexion, séparer le premier chemin de communication (13) du chemin de communication en anneau (7).

9. Système (2) selon les revendications 7 et 8, **caractérisé en ce que** le dispositif de connexion (16) possède au moins un deuxième commutateur (18),
**en ce que** le premier commutateur (17) et le deuxième commutateur (18) peuvent être commandés simultanément respectivement dans un premier état de commutation ou dans un deuxième état de commutation,
**en ce que** le premier état de commutation est présent dans le premier état de connexion et le deuxième état de commutation dans le deuxième état de connexion,
**en ce que** dans le premier état de commutation, le deuxième commutateur (18) sépare le chemin de communication en anneau (7) et le premier commutateur (17) insère le premier chemin de communication (13) dans le chemin de communication en anneau et
**en ce que** dans le deuxième état de commutation, le deuxième commutateur (18) établit la continuité du chemin de communication en anneau (7) et le premier commutateur (17) sépare le premier chemin de communication (13) du chemin de communication en anneau.

10. Système (2) selon les revendications 7 et 8, **caractérisé en ce que** le dispositif de connexion (16) possède au moins un deuxième commutateur (18) et un troisième commutateur (19),
**en ce que** le premier commutateur (17), le deuxième commutateur (18) et le troisième commutateur (19) peuvent être commandés simultanément respectivement dans un premier état de commutation ou dans un deuxième état de commutation,
**en ce que** le premier état de commutation est présent dans le premier état de connexion et le deuxième état de commutation dans le deuxième état de connexion,
**en ce que** dans le premier état de commutation, d'une part le deuxième commutateur (18) sépare le chemin de communication en anneau (7) et d'autre part le premier commutateur (17) et le troisième commutateur (19) insèrent le premier chemin de communication (13) dans le chemin de communication en anneau (7) et
**en ce que** dans le deuxième état de commutation, d'une part le deuxième commutateur (18) établit la continuité du chemin de communication en anneau (7) et d'autre part le premier commutateur (17) et le troisième commutateur (19) séparent le premier chemin de communication (13) du chemin de communication en anneau (7) .

11. Système (2) selon l'une des revendications 8 à 10, **caractérisé en ce que** le premier dispositif d'interface (11) est réalisé sous la forme d'une interface en boucle de courant.

12. Système (2) selon l'une des revendications 1 à 11, **caractérisé en ce que** le deuxième dispositif d'interface (12) est réalisé sous la forme d'une interface radio.

13. Système (2) selon l'une des revendications 1 à 12, **caractérisé en ce que** l'appareil électrique (8) est réalisé sous la forme d'un appareil de terrain.
